Europäisches Patentamt

European Patent Office

Office européen des brevets

(11) Veröffentlichungsnummer: **0 280 086**
**A1**

(12) **EUROPÄISCHE PATENTANMELDUNG**

(21) Anmeldenummer: 88101588.7

(22) Anmeldetag: 04.02.88

(51) Int. Cl.⁴: **A01C 7/10** , F16H 3/00

(30) Priorität: 12.02.87 DE 3704306
01.10.87 DE 3733169

(43) Veröffentlichungstag der Anmeldung:
31.08.88 Patentblatt 88/35

(84) Benannte Vertragsstaaten:
AT DE ES FR GB IT

(71) Anmelder: **Amazonen-Werke H. Dreyer GmbH & Co. KG**
**Am Amazonenwerk 9-13**
**D-4507 Hasbergen-Gaste(DE)**

(72) Erfinder: **Steenken, Bernd**
**Waldhöfe 17**
**D-4475 Sögel 2(DE)**
Erfinder: **Haar, Berthold**
**Kleiner Klosterweg 14**
**D-2872 Hude 1(DE)**

(54) **Verteilmaschine.**

(57) Verteilmaschine zum Ausbringen von pulverigem und körnigem Material, insbesondere Sämaschine, mit zumindest einer mittels Bodenrad über ein vorzugsweise als Freilaufgetriebe ausgebildetes Regelgetriebe angetriebenen Dosierwelle, wobei zwischen der Ausgangswelle des Regelgetriebes und der Dosierwelle zumindest ein Vorgelegegetriebe angeordnet ist. Um das Vorgelegegetriebe bei der gattungsgemäßen Verteilmaschine wesentlich zu vereinfachen und kostengünstiger zu gestalten, ist vorgesehen, daß zwischen der Ausgangswelle (20) des Regelgetriebes (8) und der Dosierwelle (4) eine lösbare Kupplungsverbindung zum direkten Kuppeln der Ausgangswelle (20) des Regelgetriebes (8) und der Dosierwelle (4) vorgesehen ist, daß zumindest ein Zahnrad (32) des Vorgelegegetriebes bei dem direkten Kuppeln außer Betrieb gesetzt ist.

FIG. 3

## Verteilmaschine

Die Erfindung betrifft eine Verteilmaschine zum Ausbringen von pulverigem und/oder körnigem Material gemäß des Oberbegriffes des Anspruches 1.

Eine derartige Verteilmaschine ist bereits durch die DE-PS 33 22 200 bekanntgeworden. Um bei dieser Verteilmaschine den genauen Arbeitsbereich des Freilaufgetriebes für kleine und kleinste Ausbringmengen pro Flächeneinheit auszunutzen, ist zwischen der Ausgangswelle des Freilaufgetriebes und der Dosierwelle ein Vorgelegegetriebe angeordnet. Mit Hilfe dieses Vorgelegegetriebes ist es möglich, eine Veränderung des Übersetzungsverhältnisses zwischen der Ausgangswelle des Freilaufgetriebes und der Dosierwelle herbeizuführen. Hierdurch wird es möglich, für kleine und kleinste Ausbringmengen den genaueren Einstellbereich des stufenlosen Freilaufgetriebes auszunutzen, so daß sich die Antriebsdrehzahl der Dosierwelle entsprechend der Ausbringmenge verändern läßt und sich so sowohl kleinste, kleine als auch große Ausbringmengen des auszubringenden Materials mit demselben Freilaufgetriebe exakt einstellen lassen.

Die konstruktive Gestaltung des bekannten, mit einem Vorgelegegetriebe ausgerüsteten Freilaufgetriebes ist sehr aufwendig und demzufolge mit hohen Herstellungskosten belastet. Durch die zusätzlichen Bauteile des Vorgelegegetriebes und die Art und Weise ihrer Anordnung in dem Gehäuse des Freilaufgetriebes vergrößert zum einen das Bauvolumen dieses Freilaufgetriebes, und durch die aus dem Getriebegehäuse herausragenden Wellenenden, auf denen die Zahnräder angeordnet sind, wird das Breitenmaß der gesamten Verteilmaschine in unvorteilhafter Weise vergrößert. Bei der konstruktiven Ausgestaltung dieses mit einem Vorgelegegetriebe ausgerüsteten Regelgetriebes handelt es sich um ein Spezialgetriebe.

Der Erfindung liegt nun die Aufgabe zugrunde, das Vorgelegegetriebe bei der gattungsgemäßen Verteilmaschine wesentlich zu vereinfachen und kostengünstiger zu gestalten.

Diese Aufgabe wird in erfindungsgemäßer Weise durch den kennzeichnenden Teil des Anspruches 1 gelöst.

Infolge dieser Maßnahmen läßt sich ein Vorgelegegetriebe von besonders einfachem Aufbau und geringem Platzbedarf herstellen, welches sich auf einfachste Weise zwischen der Ausgangswelle des Regelgetriebes und der Dosierwelle anordnen läßt, ohne daß Veränderungen an dem vorhandenen Regelgetriebe vorgenommen werden müssen. Da das Vorgelegegetriebe ein derart geringes Bauvolumen aufweist, ist es möglich, dieses Vorgelegegetriebe in den vorhandenen Freiraum an der Verteilmaschine zwischen den beiden zu verbindenden Wellen zu plazieren, ohne daß dies zu einer Vergrößerung des Bauvolumens des Regelgetriebes noch zu einer Vergrößerung des Breitenmaßes der gesamten Verteilmaschine führt. Der einfache Aufbau und die konstruktive Ausgestaltung dieses Vorgelegegetriebes ermöglicht zum einen eine besonders preiswerte Herstellung und bietet zum anderen in besonders vorteilhafter Weise die Möglichkeit zur Nachrüstung von sich bereits in der landwirtschaftlichen Praxis befindlichen Verteilmaschinen.

Die Ausführung sieht in erfindungsgemäßer Weise vor, daß jeweils auf der Ausgangswelle des Regelgetriebes und auf der Dosierwelle ein Vorgelegerad drehfest angeordnet ist, daß weiterhin ein Vorgelegerad an dem Rahmen der Verteilmaschine frei drehbar gelagert ist, welches mit den auf der Dosierwelle und der Regelgetriebeausgangswelle angeordneten Vorgelegerädern kraftschlüssig in Antriebsverbindung steht. Dadurch, daß jeweils ein Vorgelegerad auf der Ausgangswelle des Regelgetriebes und auf der Dosierwelle gelagert ist, ergibt sich eine besonders einfache Lagerung dieser Vorgelegeräder ohne zusätzliche Bauteile. Die Lagerung eines weiteren Vorgelegerades am Rahmen der Verteilmaschine stellt eine einfache Ausbildung der Vorgelegewelle dar. Hierbei ist erfindungsgemäß vorgesehen, daß das Vorgelegerad zumindest annähernd radial verschiebbar an dem Rahmen angeordnet ist, wobei das Doppelvorgelegerad bzw. die Lagerung dieses Rades abschraubbar bzw. lösbar an dem Rahmen angeordnet ist. Durch das radiale Verschieben des an dem Rahmen gelagerten Vorgelegegerades läßt sich die Wirkungsweise des Vorgelegerades in einfacher Weise aufheben, ohne daß ein Ausbauen von Vorgelegerädern notwendig ist. Nach dem Lösen der Lagerung des Doppelvorgelegerades, also der Vorgelegewelle, läßt sich das Doppelvorgelegerad in bezug auf die anderen Vorgelegeräder verschieben.

Es ist in erfindungsgemäßer Weise vorgesehen, daß die auf der Dosierwelle und der Regelgetriebeausgangswelle drehfest angeordneten Vorgelegeräder in einem axialen Abstand zueinander angeordnet sind. Hierdurch ist es möglich, daß das Doppelvorgelegerad genau in den axialen Abstand zwischen den drehfest angeordneten Vorgelegerädern eingreift, wodurch die Lage des an dem Rahmen gelagerten Doppelvorgelegerades bestimmt wird.

Die erfindungsgemäße Ausführungsform sieht vor, daß die auf den Wellen angeordneten Vorgelegeräder als Kettenräder ausgebildet sind, und daß das Doppelvorgelegerad eine Scheibe aufweist, auf welcher in gleichmäßigen Abständen mit unterschiedlichen radialen Abständen mit den Kettenrädern zusammenwirkende Ansätze angeordnet sind. Infolge dieser Maßnahmen ergeben sich sehr einfache und preiswert herzustellende Bauteile für das Vorgelegegetriebe.

Nachdem die Lagerung des Doppelvorgelegerades gelöst und radial verschoben worden ist, läßt sich die Wirkungsweise des Vorgelegegetriebes aufheben. Hierbei ist erfindungsgemäß vorgesehen, daß zumindest eines der auf den Wellen angeordneten Vorgelegeräder axial verschiebbar ausgebildet ist, und daß das eine der Vorgelegeräder in Richtung des anderen Vorgelegerades bzw. der anderen Welle verschiebbar ist, und daß über das axial verschobene Vorgelegerad die beiden Welle miteinander kuppelbar sind.

In einer Ausführungsform ist in erfindungsgemäßer Weise vorgesehen, daß das eine Vorgelegerad zusätzlich eine Innenverzahnung aufweist, die der Aussenverzahnung des anderen Vorgelegerades entspricht, so daß durch axiales Verschieben eines der Vorgelegeräder die Innenverzahnung formschlüssig in die Aussenverzahnung des anderen Vorgelegerades faßt. Diese Ausführungsform stellt eine einfache Möglichkeit zur direkten Verbindung zwischen Regelgetriebeausgangswelle und Dosierwelle dar.

In einer weiteren Ausführungsform ist erfindungsgemäß vorgesehen, daß die Nabe des einen Vorgelegerades ein Mehrkantprofil oder anderes Kupplungsprofil aufweist, welches mit dem Wellenprofil der Welle, auf der das andere Vorgelegerad angeordnet ist, durch axiales Verschieben des Vorgelegerades die beiden Wellen formschlüssig miteinander kuppelt.

Weiterhin läßt sich eine direkte Verbindung zwischen der Regelgetriebeausgangswelle und der Dosierwelle dadurch herstellen, daß die Nabe eines Vorgelegerades eine Bohrung aufweist, über die in Verbindung mit einem Bolzen und einer Bohrung in der Welle, auf welcher das andere Vorgelegerad angeordnet ist, die beiden Wellen direkt miteinander formschlüssig kuppelbar sind.

Eine weitere Ausführungsform sieht in erfindungsgemäßer Weise vor, daß die Vorgelegeräder über Verbindungselemente unmittelbar miteinander formschlüssig kuppelbar sind.

In einer weiteren Ausführungsform ist erfindungsgemäß vorgesehen, daß zwei gleiche Vorgeleteräder vorgesehen sind, welche diametral zueinander angeordnet sind und mit dem Vorgelegerad der Dosierwelle und der Regelgetriebeausgangswelle in Antriebsverbindung bringbar sind. Infolge dieser Maßnahme ist es möglich, die Vorgeleteräder aus Kunststoff herzustellen und in einfacher Weise zu lagern, weil die auftretenden radialen Kräfte durch die Diametral zueinander angeordneten zwei gleichen Vorgeleteräder aufgenommen werden. In einfacher Weise sind hierbei die zwei gleichen Vorgeleteräder in einer Lagerkassette angeordnet, welche an der Verteilmaschine in Betriebsstellung montierbar sowie abnehmbar angeordnet ist.

Weitere Einzelheiten der Erfindung sind der Beispielsbeschreibung und den Zeichnungen zu entnehmen. Hierbei zeigen

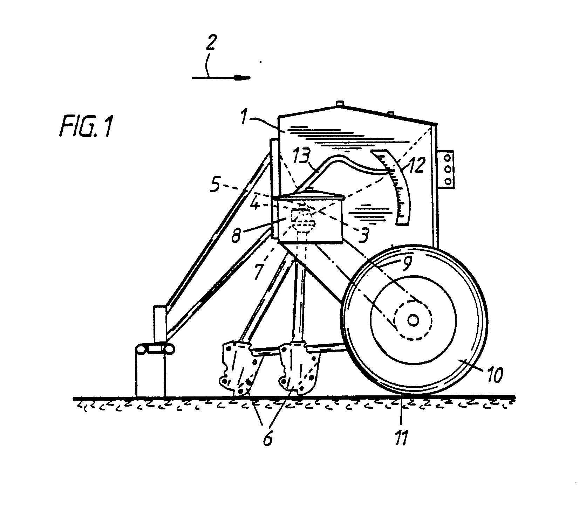

Fig. 1 die in erfindungsgemäßer Weise ausgerüstete und als Sämaschine ausgebildete Verteilmaschine in Prinzipdarstellung in der Seitenansicht

Fig. 2 das Regelgetriebe in vergrößertem Maßstab,

Fig. 3 das erfindungsgemäße Vorgelegegetriebe in Prinzipdarstellung, wobei der Antrieb der Dosierwelle vom Regelgetriebe über das Vorgelegegetriebe erfolgt,

Fig. 4 das Vorgelegegetriebe gemäß Fig. 3, mit direktem Antrieb der Dosierwelle,

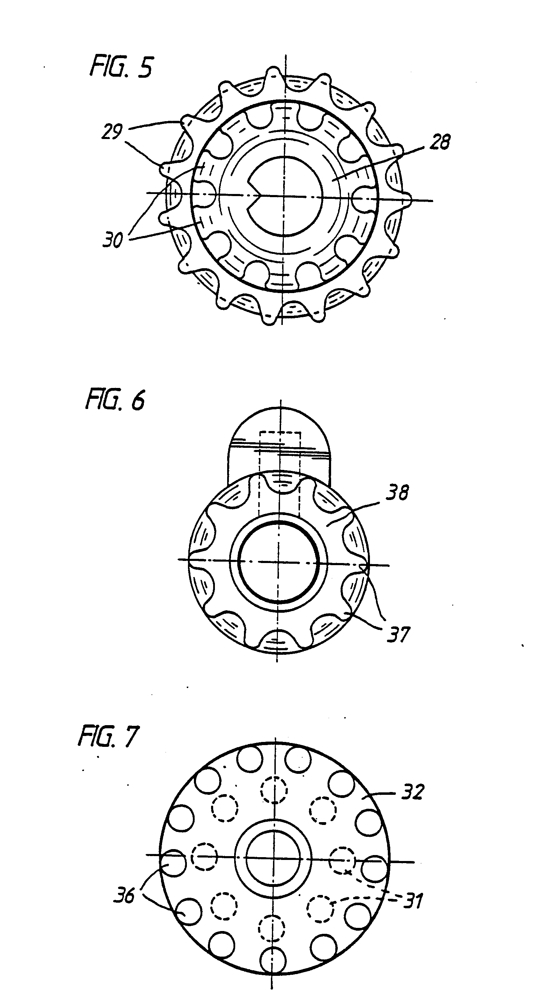

Fig. 5 das erfindungsgemäße, auf der Dosierwelle angeordnete Vorgelegerad,

Fig. 6 das erfindungsgemäße, auf der Regelgetriebausgangswelle angeordnete Vorgelegerad,

Fig. 7 das erfindungemäße Doppelvorgelegerad,

Fig. 8 eine andere Ausführungsform des erfindungsgemäßen Vorgelegetriebes,

Fig. 9 eine weitere Ausführungform des erfindungsgemäßen Vorgelegegetriebes,

Fig. 10 ein weiteres erfindungsgemäßes Vorgelegegetriebe in Prinzipdarstellung, und Seitenansicht, wobei der Antrieb der Dosierwelle vom Regelgetriebe über das Vorgelegegetriebe erfolgt,

Fig. 11 das Vorgelegegetriebe gemäß Fig. 10 in der Ansicht XI - XI und

Fig. 12 das Vorgelegegetriebe gemäß Fig. 10 und 11, mit direktem Antrieb der Dosierwelle.

Die Verteilmaschine ist als Sämaschine ausgebildet und mit einem Vorratsbehälter 1 ausgestattet, wobei sich in dem Vorratsbehälter 1 mehrere quer zur Fahrtrichtung 2 angeordnete Auslauföffnungen 3 befinden. Vor diesen nebeneinander angeordneten Auslauföffnungen 3 befindet sich jeweils ein mit der Dosierwelle 4 drehfest verbundenes Dosierrad 5, über das die sich im Vorratsbehälter 1 befindlichen auszubringenden Materialen in genau einstellbaren Mengen den Säscharen 6 zugeführt werden. Die Dosierwelle 4 ist drehbar an dem Vorratsbehälter 1 gelagert, wobei die einzelnen Dosierräder 5 jeweils teilweise von einem Dosiergehäuse 7 umgeben werden. Der Antrieb der Dosierwelle 4 und somit der Dosierräder 5 erfolgt über das stufenlos einstellbare Regelgetriebe 8, welches mit Hilfe des Kettentriebes 9 von einem Laufrad 10, mit dem sich die Verteilmaschine auf dem Boden 11 abstützt, angetrieben wird. Die Antriebsdrehzahl der Dosierwelle 4 ist proportional der Ausbringmenge. Durch eine entsprechende Verstellung des stufenlos regelbaren Regelgetriebes 8 mit Hilfe des mit der Einstellskala 12 zusammenwirkenden Einstellhebels 13 lassen sich unterschiedliche Ausbringmengen einstellen.

Über den Kettentrieb 9 wird die Eingangswelle 14 des Regelgetriebes 8 angetrieben. Im inneren des Gehäuses 15 des Regelegetriebes 8 befindet sich der Exzentermechanismus 16, der die auf der Eingangswelle 14 hintereinander angeordneten, jeweils mit fünf spiegelbildlichen Nocken 17 aufgestatteten beiden Exzenter 18 aufweist. Mit den Exzentern 18 tritt jeweils ein mit Hilfe einer nicht dargestellten Feder elastisch anlenkbarer Hebelarm 19, der auf der Ausgangswelle 20 des Regelgetriebes 8 gelagerten Freilaufgehäuse 21, in Wirkverbindung. Hierbei rollt die jeweils an den Hebelarmen 19 angeordnete Rolle 22 am Umfang 23 der Exzenter 18 ab, so daß das Freilaufgehäuse 21 während einer Umdrehung der Eingangswelle 14 zehn mal ausgelenkt wird, wodurch die Ausgangswelle 20 in Rotation versetzt wird. Oberhalb der Freilaufgehäuse 21 ist das an dem Verstellhebel 13 angeordnete Anschlagelement 24 auf der Verstellhebelwelle 25 schwenkbar gelagert. An diesem Anschlagelement 24 kommt das jeweilige obere Teil 26 der Freilaufgehäuse 21 zur Anlage und begrenzt somit den Auslenkweg der Freilaufgehäuse 21. Über den jeweiligen Auslenkbereich der Freilaufgehäuse 21 läßt sich die Drehzahl der Ausgangswelle 20, die proportional einer bestimmten Ausbringmenge des auszubringenden Materials ist, einstellen. Das Ein-bzw. Verstellen der Ausbringmenge erfolgt über den Verstellhebel 13, der mit einer an der Verteilmaschine angeordneten Anstellskala 12 zusammenwirkt, so daß sich die jeweils gewünschte Ausbringmenge von "Null" bis zu einem Maximalwert stufenlos einstellen läßt. In der eingezeichneten Lage befindet sich der Verstellhebel 13 in Nullstellung.

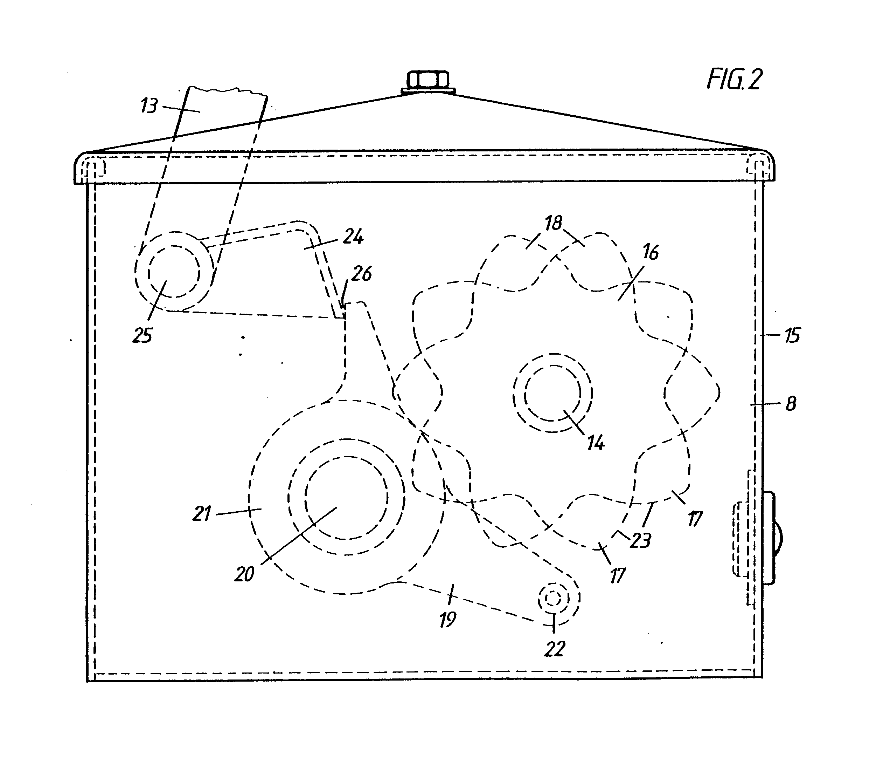

Die Einstellung besonders kleiner Ausbringmengen mit dem stufenlosen Regelgetriebe 8 gemäß Fig. 2 bereitet aber Schwierigkeiten beim exakten Einstellen und Ausbringen dieser kleinsten Ausbringmengen. Beim Ausbringen dieser kleinsten Ausbringmengen erfolgt nur eine sehr geringe Auslenkung der Freilaufgehäuse 21, so daß die Ausgangswelle 20 nicht gleichförmig in Rotation versetzt wird. Aus diesem Grunde wird zwischen der Ausgangswelle 20 des Regelgetriebes 8 und der Dosierwelle 4 das Vorgelegegetriebe 27 angeordnet.

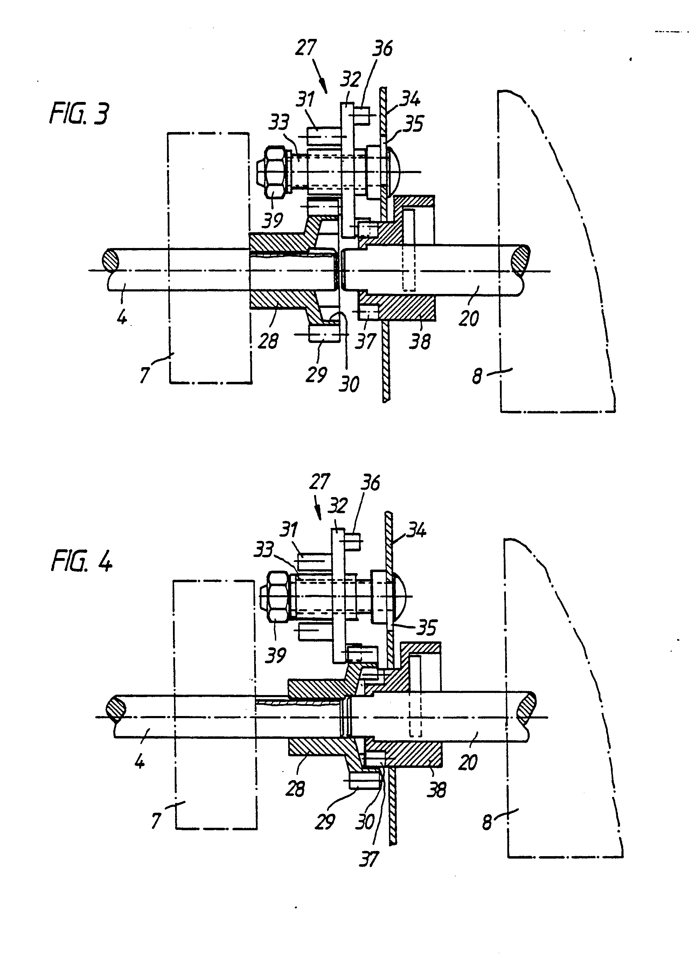

Das Vorgelegegetriebe 27 besteht aus dem auf der Dosierwelle 4 angeodneten Vorgelegerad 28, das drehfest mit der Dosierwelle 4 verbunden ist. Dieses Vorgelegerad 28 weist die kettenradähnliche Aussenverzahnung 29 und die Innenverzahnung 30 auf. Gemäß Fig. 3 wirkt die Aussenverzahnung 29 des Vorgelegerades 28 mit den Ansätzen 31 des Doppelvorgelegerades 32 zusammen, wobei sich das auf der Dosierwelle 4 verschiebbare Vorgelegerad 28 in dieser Position an der Seitenwand des Dosiergehäuses 7 abstützt. Dieses Doppelvorgelegerad 32 ist drehbar auf dem Bolzen 33 gelagert und mit diesem Bolzen 33 an der Seitenwand 34 der Verteilmaschine befestigt. Die Seitenwand 34 weist das Langloch 35 auf, so daß sich das Doppelvorgelegerad in radialer Richtung verschieben läßt. Das Doppelvorgelegerad 32 weist weiterhin die auf dem größeren Druchmesser angeordneten Ansätze 36 auf, die mit der Verzahnung 37 des ebenfalls drehfest auf der Welle 20 angeordneten Vorgelegerades 38 zusammenwirkt.

Gemäß Fig. 3 wird die Drehzahl der Getriebeausgangswelle 20 mit Hilfe des Vorgelegegetriebes 27 ins "Kleine" untersetzt, so daß die Dosierwelle 4 mit einer geringeren Drehzahl angetrieben wird. D.h., die relativ hohe der Getriebeausgangswelle 20 wird nun auch das Untersetzungsverhältnis reduziert, so daß sich für die Dosierwelle 4 eine kleinere Drehzahl ergibt. Hierdurch ist es nun möglich, am Einstellhebel 13 eine größere Ausbringmenge einzustellen, und somit den genaueren Einstellbereich des Regelgetriebes 8 auszunutzen. Mit Hilfe des Vorgelegegetriebes 27 wird nun die Antriebsdrehzahl für die Dosierwelle 4 wieder reduziert, so daß nicht die am Einstellhebel 13 eingestellte Ausbringmenge, die einer bestimmten Artriebsdrehzahl der Regelgetriebeausgangswelle 20 entspricht, sondern die dem Übersetzungsverhältnis entsprechende Ausbringmenge ausgebracht wird. Somit läßt sich der relativ genaue Einstellbereich des als Freilaufgetriebe ausgebildeten stufenlosen Regelgetriebes 8 auch für die Einstellung kleiner und kleinster Ausbringmengen ausnutzen.

Gemäß Fig. 4 wird die Dosierwelle 4 mit der gleichen Drehzahl wie die Getriebeausgangswelle 20 des Regelgetriebes 8 angetrieben, da die beiden Wellen 4 und 20 direkt miteinander gekoppelt sind. Zum direkten Verbinden der beiden Wellen 4 und 20 wird zunächst die Mutter 39 des Bolzens 33, auf dem das Doppelvorgelegerad 32 drehbar gelagert ist, gelöst und der Bolzen 33 in dem Langloch 35 nach oben verschoben. Jetzt läßt sich das Vorgelegerad 38, das sich bisher an der Seitenwand des Dosiergehäuses 7 abgestützt hat, in Richtung auf die Getriebeausgangswelle 20 verschieben, wobei die Innenverzahnung 30 des Vorgelegerades 28 mit der Verzahnung 37 des Vorgelegerades 38 zusammenwirkt. Das Doppelvorgelegerad 32 wird jetzt etwas abgesenkt und in dieser Position befestigt. Nun stützt sich das Vorgelegerad 28 gegen das Doppelvorgelegerad 32 ab, so daß es nicht nach hinten wandern kann, und das Zusammenwirken der beiden Vorgelegeräder 28 und 38 gewährleistet ist, so daß die Dosierwelle 4 direkt von der Getriebeausgangswelle 20 angetrieben wird.

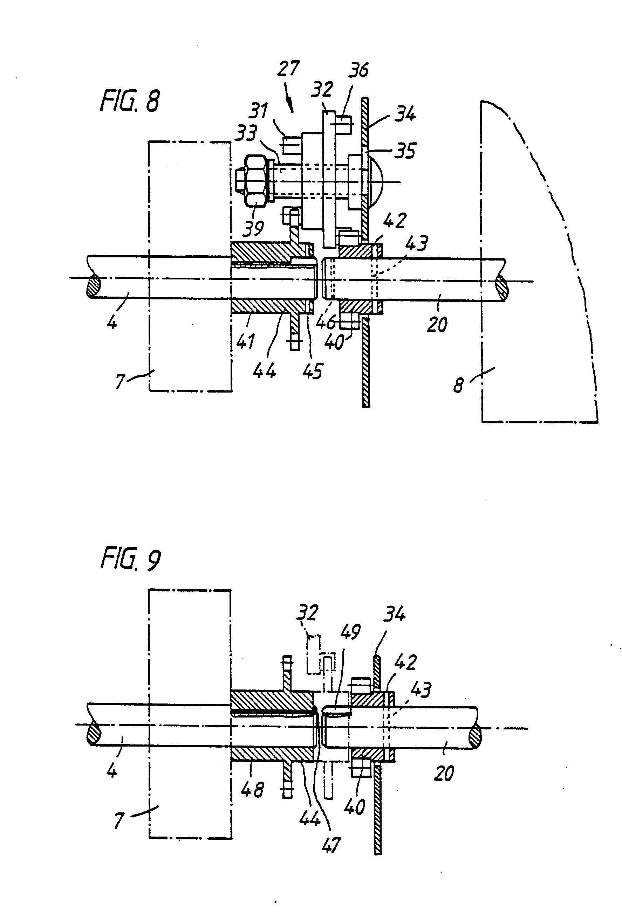

Das Vorgelege 27 gemäß Fig. 8 unterscheidet sich nur durch eine etwas andere konstruktive Ausgestaltung der Vorgelegeräder 40 und 41. Das Vorgelegerad 40 befindet sich auf der Getriebeausgangswelle 20 und ist mit Hilfe des Stiftes 42, der durch die Bohrung 43 der Welle 20 gesteckt ist, verbunden. Das Vorgelegerad 41 ist drehfest und in axialer Richtung verschiebbar mit der Dosierwelle 4 verbunden. Erfolgt der Antrieb der Dosierwelle 4 über das Vorgelegegetriebe 27, stützt sich das Vorgelegerad 41 gegen die Seitenwand des Dosiergehäuses 7 ab und wird auf der anderen Seite durch das Doppelvorgelegerad 32 arretiert. Sollen nun die Dosierwelle 4 und die Getriebeausgangswelle 20 des Regelgetriebes 8 direkt miteinander verbunden werden, so wird das Doppelvorgelegerad 32 gelöst und nach oben verschoben, so daß das Vorgelegerad 41 derart in axialer Richtung verschoben werden kann, daß die sich in der Nabe 44 des Vorgelegerades 41 befindliche Bohrung 45 mit der Bohrung 46 der Getriebeausgangswelle 20 fluchtet, so daß das Vorgelegerad 41 über einen Bolzen drehfest mit der Getriebeausgangswelle 20 verbunden werden kann.

Gemäß Fig. 9 weisen sowohl die Dosierwelle 4 als auch die Getriebeausgangswelle 20 ein Kupplungsprofil 47 und ein Wellenprofil 49 auf, so daß diese beiden Wellen 4 und 20 durch Verschieben des Vorgelegerades 48 direkte miteinander verbunden werden. Hierbei erfolgt die Arretierung des Vorgelegerades 48 in dieser Position wieder mittels des Doppelvorgelegerades 32.

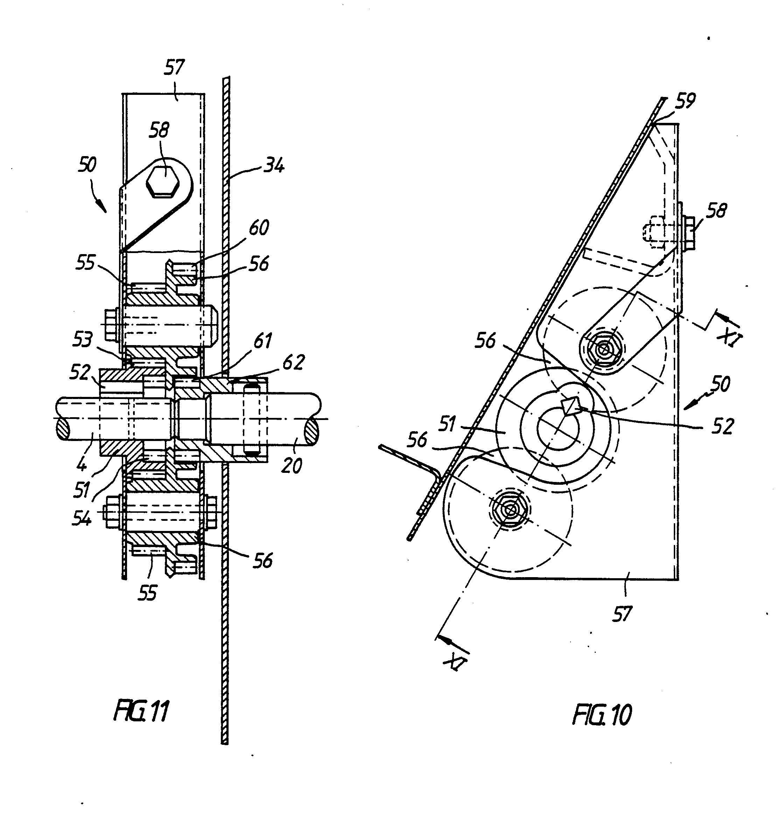

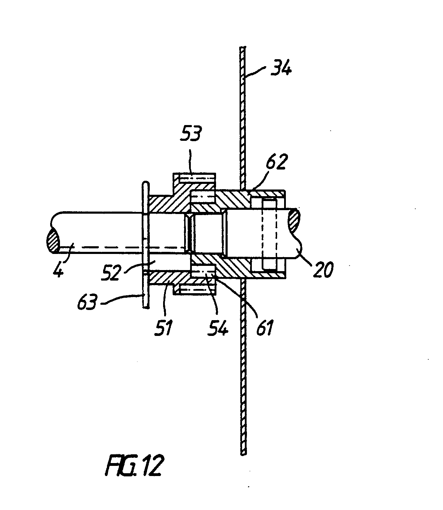

Das Vorgelegegetriebe 50 gemäß Fig. 10 und 11 besteht aus dem auf der Dosierwelle 4 angeordnetem Vorgelegerad 51, welches drehfest mit der Dosierwelle 4 über den Keil 52 verbunden ist. Dieses Vorgelegerad 28 weist die Außenverzahnung 53 und die Innenverzahnung 54 auf. Gemäß Fig. 3 wirkt die Außenverzahnung 53 des Vorgelegerades 51 mit den Zähnen 55 der zwei gleichen Doppelvorgelegeräder 56 zusammen. Diese zwei gleichen Doppelvorgelegeräder 56 sind in der Lagerkassette 57 drehbar angeordnet. Des weiteren sind die zwei gleichen Vorgelegeräder 56 diametral gegenüberliegen zueinander angeordnet. Die Lagerkassette 57 ist über die Schrauben 58 an der am Rahmen der Verteilmaschine angeordneten Halterung 58 befestigt. Die Doppelvorgelegeräder 56 weisen die auf einem größeren Durchmesser angeordneten Zähne 60 auf, die mit der Verzahnung 61 des ebenfalls drehfest auf der Welle 20, die von dem Regelgetrieb und einer Kraftquelle angetrieben wird, angeordneten Vorgelegerades 62 zusammenwirkt.

Gemäß Fig. 10 und 11 wird die Drehzahl der Getriebeausgangswelle 20 mit Hilfe des Vorgelegegetriebes 15 ins "Kleine" untersetzt, so daß die Dosierwelle 4 mit einer geringeren Drehzahl angetrieben wird d.h., daß die relativ hohe Ausgangsdrehzahl der Getriebeausgangswelle 20 wird nun durch das Untersetzungsverhältnis des Vorgelegegetriebes 15 so reduziert, daß sich für die Dosierwelle 4 eine kleinere Drehzahl ergibt.

Gemäß Fig. 12 wird die Dosierwelle 4 mit der gleichen Drehzahl wie die Getriebeausgangswelle 20 des Regelgetriebes angetrieben, da die beiden Wellen 24 über die Vorgelegeräder 51 und 62 direkt miteinander gekuppelt sind. Zum direkten Verbinden der Wellen 24 wird zunächst die Schraube 58 entfernt, damit die Getriebekassette 57 mit den zwei gleichen Vorgelegerädern 56 abgenommen werden kann. Danach wird das Vorgelegerad 51 verschoben, so daß die Innenverzahnung 54 in die Verzahnung 61 des Vorgelegerades 62 faßt. Hierdurch wird eine direkte Kupplung der Wellen 24 erreicht. Durch den durch eine Bohrung in der Welle 4 gesteckten Sicherungselement, welches beispielsweise als Federstecker 63 ausgebildet sein kann, wird ein unbeabsichtigtes seitliches Verschieben des Zahnrades 51 verhindert.

Somit ist also nach Abnahme der Lagerkassette 57 aus ihrer Betriebsstellung und nachdem das Zahnrad 51 mit dem Zahnrad 62 direkt gekoppelt ist, eine direkte Antriebsverbindung zwischen der Welle 4 und der Welle 20 hergestellt.

## Ansprüche

1. Verteilmaschine zum Ausbringen von pulverigem und körnigem Material, insbesondere Sämaschine, mit zumindest einer mittels Bodenrad über ein vorzugsweise als Freilaufgetriebe ausgebildetes Regelgetriebe angetriebenen Dosierwelle, wobei zwischen der Ausgangswelle des Regelgetriebes und der Dosierwelle zumindest ein Vorgelegegetriebe angeordnet ist, dadurch gekennzeichnet, daß zwischen der Ausgangswelle (20) des Regelgetriebes (8) und der Dosierwelle (4) eine lösbare Kupplungsverbindung (27) zum direkten Kuppeln der Ausgangswelle (20) des Regelgetriebes (8) und der Dosierwelle (4) vorgesehen ist, daß zumindest ein Zahnrad (32) des Vorgelegegetriebes (27) bei dem direkten Kuppeln außer Betrieb gesetzt ist.

2. Verteilmaschine nach Anspruch 1, dadurch gekennzeichnet, daß jeweils auf der Ausgangswelle (20) des Regelgetriebes (8) und auf der Dosierwelle (4) ein Vorgelegerad (28,38,40,41,48) drehfest angeordnet ist, daß weiterhin ein Vorgelegerad (32) an dem Rahmen (34) der Verteilmaschine frei drehbar gelagert ist, welches mit den auf der Dosierwelle (4) und der Regelgetriebeausgangswelle (20) angeordneten Vorgelegerädern (28,38,40,41,48) kraftschlüssig in Antriebsverbindung steht.

3. Verteilmaschine nach Anspruch 2, dadurch gekennzeichnet, daß das Vorgelegerad (32) zumindest annähernd radial verschiebbar an dem Rahmen (34) angeordnet ist.

4. Verteilmaschine nach Anspruch 2, dadurch gekennzeichnet, daß das Doppelvorgelegerad (32) bzw. die Lagerung dieses Rades abschraubbar bzw. lösbar an dem Rahmen (34) angeordnet ist.

5. Verteilmaschine nach Anspruch 1, dadurch gekennzeichnet, daß die auf der Dosierwelle (4) und der Regelgetriebeausgangswelle (20) drehfest angeordneten Vorgelegeräder (28,38,40,41,48) in einem axialen Abstand zueinander angeordnet sind.

6. Verteilmaschine nach Anspruch 5, dadurch gekennzeichnet, daß die auf den Wellen (4,20) angeordneten Vorgelegeräder (28,38,40,41,48) als Kettenräder ausgebildet sind, daß das Doppelvorgelegerad (32) eine Scheibe aufweist, auf welcher in gleichmäßigen Abständen mit unterschiedlichen radialen Abständen mit den Kettenrädern zusammenwirkende Ansätze (30,35) angeordnet sind.

7. Verteilmaschine nach Anspruch 5, dadurch gekennzeichnet, daß zumindest eines der auf den Wellen (4,20) angeordneten Vorgelegeräder (28,38,40,41,48) axial verschiebbar ausgebildet ist, daß das eine der Vorgelegeräder (28,41,48) in Richtung des anderen Vorgelegerades (38,40) bzw. der anderen Welle verschiebbar ist, daß über das axial verschobene Vorgelegerad (28,38,40,41,48) die beiden Wellen (4,20) unmittelbar kuppelbar sind.

8. Verteilmaschine nach Anspruch 7, dadurch gekennzeichnet, daß das eine Vorgelegerad (28) zusätzlich eine Innenverzahnung (30) aufweist, die der Aussenverzahnung (37) des anderen Vorgelegerades (38) entspricht, so daß durch axiales Verschieben eines der Vorgelegeräder (28,38) die Innenverzahnung (30) formschlüssig in die Aussenverzahnung (37) des anderen Vorgelegerades (38) faßt.

9. Verteilmaschine nach Anspruch 7, dadurch gekennzeichnet, daß die Nabe (44) des einen Vorgelegerades (48) ein Mehrkantprofil oder anderes Kupplungsprofil (47) aufweist, welches mit dem Wellenprofil (49) der Welle (20) auf der das andere Vorgelegerade (40) angeordnet ist, durch axiales Verschieben des Vorgelegerades (48) die beiden festen Wellen (4,20) formschlüssig miteinander kuppelt.

10. Verteilmaschine nach Anspruch 7, dadurch gekennzeichnet, daß die Nabe (44) eines Vorgelegerades (41) eine Bohrung (45) aufweist, über die in Verbindung mit einem Bolzen und einer Bohrung (46) in der Welle (20) auf welcher das andere Vorgelegerad (40) angeordnet ist, die beiden Wellen (4,20) direkt miteinander formschlüssig kuppelbar sind.

11. Verteilmaschine nach Anspruch 5, dadurch gekennzeichnet, daß die Vorgelegeräder (28,38,40,41,48) über Verbindungselemente unmittelbar miteinander formschlüssig kuppelbar sind.

12. Verteilmaschine nach Anspruch 2, dadurch gekennzeichnet, daß zwei gleiche Vorgelegeräder (56) vorgesehen sind, welche diametral zueinander angeordnet sind und mit dem Vorgelegerad (51) der Dosierwelle (4) und der Regelgetriebeausgangswelle (20) in Antriebsverbindung bringbar sind.

13. Verteilmaschine nach Anspruch 12, dadurch gekennzeichnet, daß die zwei gleichen Vorgelegeräder (56) in einer Lagerkassette (57) angeordnet sind, welche an der Verteilmaschine in Betriebsstellung montierbar sowie abnehmbar angeordnet ist.

FIG. 1

FIG.2

0 280 086

FIG. 3

FIG. 4

FIG. 5

FIG. 6

FIG. 7

FIG. 8

FIG. 9

FIG. 11

FIG. 10

FIG. 12

Europäisches
Patentamt

**EUROPÄISCHER RECHERCHENBERICHT**

Nummer der Anmeldung

EP 88 10 1588

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB-A- 609 990 (ABBEY)<br>* Insgesamt *<br>--- | 1 | A 01 C 7/10<br>F 16 H 3/00 |
| A | FR-A-2 504 350 (AMAZONEN-WERKE H. DREYER)<br>--- | | |
| A,D | DE-A-3 322 200 (AMAZONEN-WERKE H. DREYER)<br>--- | | |
| A | DE-A-3 436 222 (RAUCH)<br>--- | | |
| A | FR-A-2 458 985 (AMAZONEN-WERKE H. DREYER)<br>----- | | |

**RECHERCHIERTE SACHGEBIETE (Int. Cl.4)**

A 01 C
F 16 H

Der vorliegende Recherchenbericht wurde für alle Patentansprüche erstellt

| Recherchenort | Abschlußdatum der Recherche | Prüfer |
|---|---|---|
| DEN HAAG | 25-05-1988 | VON ARX V.U. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
......................................................................
& : Mitglied der gleichen Patentfamilie, übereinstimmendes Dokument

EPO FORM 1503 03.82 (P0403)